# EUROPEAN PATENT SPECIFICATION

(11) **EP 4 716 159 B1**
(45) Date of publication and mention of the grant of the patent: **12.08.2026**
(21) Application number: 24201397.7
(22) Date of filing: 19.09.2024
(51) Int. Cl.: H04L 12/28, H04L 41/0806, H04L 41/0893, H04W 84/18

(54) **METHOD FOR BUILDING A DEVICE NETWORK AND A CORRESPONDING DEVICE NETWORK**
VERFAHREN ZUM AUFBAU EINES GERÄTENETZWERKS UND EIN ENTSPRECHENDES GERÄTENETZWERK
PROCÉDÉ DE CONSTRUCTION D'UN RÉSEAU DE DISPOSITIFS ET RÉSEAU DE DISPOSITIFS CORRESPONDANT

(43) Date of publication of application: 25.03.2026
(73) Proprietor: Peeriot GmbH, 04107 Leipzig (DE)
(72) Inventor: Hüskes, Ralf, 72414 Rangendingen (DE); Ortloff, Dirk, 86157 Augsburg (DE)
(74) Representative: Sonnenberg Harrison Partnerschaft mbB

(56) References cited:
- US-A1- 2019 349 254
- US-A1- 2022 132 303
- ALEJANDRO JAIRO ET AL: "Deliverable D1.1. Review of Reference Architectures for IoT Enabled Agriculture Development. Consultancy Design of a reference architecture for an IoT sensor network. Company International Center for Tropical Agriculture (CIAT)", 29 April 2019 (2019-04-29), XP093117592, Retrieved from the Internet <URL:https://cgspace.cgiar.org/server/api/core/bitstreams/813f2f98-a004-4fd9-a2d6-c56766053845/content> [retrieved on 20240110]

## Description

### TECHNICAL FIELD OF THE INVENTION

The present invention relates to a method for building a self-organized, semantic-based device network. The present invention also relates to such a self-organized, semantic-based device network. The present invention furthermore relates to a computer program product for performing such a method.

### BACKGROUND OF THE INVENTION

In the evolving landscape of Industry 4.0 and the Internet of Things (IoT), the integration of intelligent, interconnected devices is revolutionizing industrial and commercial sectors. Self-organized, semantic-based device networks represent a cutting-edge approach to this integration, leveraging advanced technologies to create dynamic, adaptive systems that enhance efficiency, flexibility, and scalability. These networks enable devices to autonomously organize, communicate, and cooperate based on shared semantic information, reducing the need for centralized control and manual intervention.

In industrial applications, such as agriculture, security, manufacturing, logistics, and supply chain management, self-organized networks can optimize operations by enabling real-time decision-making and resource allocation. In commercial settings, they facilitate smart building management, energy efficiency, and enhanced customer experiences. By utilizing semantic technologies, these networks ensure that devices can understand and interpret data contextually, leading to more accurate and meaningful interactions.

As industries and businesses strive for greater automation and connectivity, self-organized, semantic-based device networks offer a promising solution, paving the way for more resilient and intelligent systems that can adapt to ever-changing environments and demands. This introduction explores the principles behind these networks, their key benefits, and their transformative potential across various sectors.

Distributed computer networks systems have long been a crucial component of modern computing, using communication and data exchange between different parts of systems. However, setting up and maintaining these systems may be a time-consuming and may represent a laborious task, requiring manual configuration of network nodes and their interactions.

The current state of the art in computer networking considers a focus on manual configuration and centralized control, which can lead to inefficiencies and security vulnerabilities. For instance, manually configuring device setups and integrating edge systems can be a time-consuming and costly process, leaving room for errors and security breaches. Furthermore, the reliance on cloud-based storage and processing can make distributed data processing slow and prone to latency issues, hindering the overall performance of computer networks. Against this backdrop, there is a pressing need for solutions that can address these challenges by leveraging the principles of self-organization and self-optimization of a network.

In other words, the current state of the art device networks and the therewith related data processing face significant challenges, particularly in terms of interoperability, security, and efficiency. With the proliferation of IoT devices and the growing demand for AI-based data processing, the need for a more robust and scalable solution has become increasingly urgent. Existing solutions often rely on centralized cloud-based architectures, which can be vulnerable to attacks and latency issues. Moreover, setting up and maintaining device networks can be time-consuming and costly, with little standardization across different protocols and systems.

US 2019/349 254 A1 describes that an Internet of Things (IoT) network includes an orchestrator to issue service management requests, a service coordinator to identify components to participate in the service, and a component to perform a network service element. An IoT network includes an IoT device with service enumerator, contract enumerator, and join contract function. An IoT network apparatus includes permissions guide drafter for discovered peers, and permissions guide action executor. An IoT network apparatus includes floating service permissions guide drafter for discovered hosts, host hardware selector, floating service permissions guide executor, and service wallet value transferor. An IoT network apparatus includes permissions guide drafter for first and second discovered peers, parameter weight calculator, permissions guide term generator, and permissions guide action executor. An IoT network includes an IoT device with resource hardware component identifier, processor to process a received indication of an external module hardware requirement, an external module comparer, and deactivation signal transmitter.

US 2020/067 787 A1 discloses a computer-implemented method including: receiving, by a computing device, information regarding a range in which an Internet-of-Things (IoT) network is to be implemented; determining, by the computing device, respective detection scores for a plurality of IoT devices for each of a plurality of proposed congregation of IoT devices; determining, by the computing device, a minimum number of the plurality of IoT devices to cover the range by incorporating the detection scores into a covariance model; and outputting, by the computing device, information identifying the minimum number of the plurality of IoT devices for designing the IoT network.

### SUMMARY OF THE INVENTION

Against this background, it is an object of the present invention to provide an improved method for building a self-organized, semantic-based device network and a respectively improved device network.

The object of the present invention is attained by a method for building a self-organized, semantic-based device network having the features of claim 1. The object of the present invention is attained by a self-organized, semantic-based device network having the features of claim 9.

Advantageous embodiments of the present disclosure are the subject matter of the dependent claims.

Linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

In accordance with a first aspect, a method for building a self-organized, semantic-based device network with at least one device for performing at least one network task is provided. The at least one device comprises at least two logic cells communicatively connected to one another and configured for collaborating in and providing resources for the at least one network task. The method comprises the steps of:
providing a theme definition based on a semantic metamodel, the semantic metamodel comprising language elements including standardized and/or adjustable vocabulary and/or semantic connections between language elements, the theme definition being ontology-based and comprising an input description of at least one task to be assigned to the device network;
generating an execution plan based on the theme definition, the execution plan specifying at least communication connections, a connectivity type between the logic cells and/or a capability description about an availability of the respective device and/or the respective logic cell to perform at least a part of the at least one network task, and comprising information about the communication connection of the at least two logic cells;
transmitting one or more messages between the at least two logic cells based on the execution plan; and
during the communication, utilizing a network optimization model configured to determine placement of at least one of the at least two cells in the network to build the self-organized, semantic-based device network for collaboratively performing the at least one network task among the at least two cells, wherein the utilizing is performed continuously or at predefined time intervals.

In accordance with a second aspect, a self-organized, semantic-based device network with at least one device is provided, the at least one device comprising at least two logic cells communicatively connected to one another; the network comprising:
a theme definition module configured for providing a theme definition based on semantic metamodel, the theme definition comprising an input description of at least one task to be assigned to the device network;
execution plan module configured for generating an execution plan based on the theme definition, the execution plan comprising information about the communication connection of the at least two logic cells;
a transmission module configured for transmitting one or more messages between the at least two logic cells based on the execution plan; and
a network optimization module configured for utilizing a network optimization model for placing at least one of the at least two cells in the network to build the self-organized, semantic-based device network.

The presented aspects propose a method for creating self-organized semantic-based device networks that can efficiently collect, store, process, and/or share information based on a given ontology. By generating the execution plan, and by distributing the execution plan (in form of the one or more messages) to or among the individual devices / to or among the logic cells, the execution plan can be interpreted by the logic cells. Thus, the device network can use self-organizing procedures to build a distributed processing logic. The present methods and device networks provide a highly scalable and flexible solution for creating self-organized semantic device networks that can efficiently collect, store, process, and/or share information based on an ontology. By leveraging the power of decentralized networking and distributed data processing, this approach enables efficient and reliable collection, storage, processing, and/or retrieval of information from the device network. The provided methods and device networks are furthermore designed to be highly scalable and adaptable, allowing for seamless integration with various transport protocols, device types and/or logic cell types. The provided methods and device networks also consider a robust and secure foundation for AI-based data processing.

The method involves at least one device that consists of at least two logic cells. Alternatively, the method involves at least two devices having at least one logic cell, respectively. These logic cells are communicatively connected to each other, enabling collaboration and resource sharing to perform network tasks. Another feature of this method is the provision of a theme definition based on a semantic metamodel. This theme definition may include an input description of the tasks that need to be assigned to the device network. The semantic metamodel ensures that the tasks are defined in a meaningful context, allowing for more accurate task allocation and execution. Based on the theme definition, the method(s) generates an execution plan. This plan may contain detailed information about the communication connections between the logic cells. The execution plan may be for guiding the interactions and collaboration between the logic cells, ensuring that the network tasks are performed efficiently. The method involves transmitting one or more messages between the logic cells according to the execution plan. This communication may be crucial for coordinating actions of the logic cells, enabling them to work together effectively to perform the assigned network tasks. During the communication process, the method utilizes a network optimization model. For example, as an optimization model, a gradient simulation method may be used for self-organization to create the network structure. The optimization model helps determine the optimal placement of at least one of the logic cells within the network. By simulating various configurations and optimizing the placement of the logic cells, the method ensures that the network is built in a self-organized manner that maximizes efficiency and performance. The overall aim of this method is to build a self-organized, semantic-based device network where the logic cells collaboratively perform the network tasks. By leveraging the semantic metamodel, execution plan, and optimization model, the method(s) ensures that the logic cells can dynamically organize and collaborate to achieve the desired network outcomes. These features collectively enable the creation of a decentralized, self-organizing network that can adapt to changing conditions and tasks, making it highly scalable and efficient for industrial and commercial applications.

Such a device (information) network may consist of a few devices (i.e. computers) in a room, dozens of devices on a factory floor, or many thousands of devices spread all over the world. The only importance is that these devices have "joined" a common theme definition and that they also have the right to take part in the network. The method uses the resources of each device like main memory, storage, processing power and/or connectivity to process messages in a distributed, fault-tolerant, secure and completely self-organized way. The method thus creates a new category of middleware for handling information and has the potential to disrupt many current applications. It enables the creation of distributed, highly resilient information ecosystems. It enables the replacement of centrally managed, cloud-based systems with decentralized, self-organizing systems. It allows the creation of individually owned infrastructures, public infrastructures managed by multiple entities, and/or even completely open, crowd-based information systems.

The "self-organized, semantic-based device network" may consider that processing of information of the device network is performed in a self-organized manner between the logic cells, i.e. following the instructions of the execution plan. This allows for efficient and reliable data processing, as the device network can adapt to changing conditions and requirements without requiring centralized control or intervention. The device network may be part of a peer-to-peer network. The device network may be configured on top of a peer-to-peer network.

The "logic cell" may refer to a node or peer in the device created network. Such a logic cell may comprise at least one functional block, which may allow the logic cell to determine its respective role within the network. The logic cell may be configured to derive its own role only via its (local) interaction with direct or indirect neighboring logic cells. Logic cells may consider units within a device or network that possess computational and communication capabilities. The logic cells may be the building blocks of the device network, capable of processing data, executing tasks, and/or communicating with other logic cells. In the context of a self-organized, semantic-based device network, logic cells may collaborate and share resources to collectively perform network tasks. Each logic cell may be configured to handle specific functions or roles, and their interactions may be coordinated through communication connections as outlined in the network's execution plan. The provided method and device networks break down data processing into small, autonomous steps. These steps may be implemented in the logic cells. A logic cells may receive an input message, process it, and may generate between 0 and n output messages. During processing, the cells may save messages and/or access older messages. The output message(s) may therefore contain different information than the input message(s). Each device in a network may host several such logic cells, depending on the needs of the device network and its own capabilities, such as computing power and/or storage capacity. A network may comprise different cell types - and like tissues in the human body, these different cell types may join to form overarching structures that perform tasks. Logic cells may differ not only in their tasks, but also in their responsibility for different subsets of information within the same information structure. These different subsets of information may be called partitions. For example, it may be possible to have a device network that collects global temperature data and create separate partitions for each country in which the temperature data for that country is managed. To summarize, logic cells may be considered as the atomic processing units in the device network. Their tasks may be defined by their cell type and/or the partition they are responsible for. The behavior of the logic cell types may be determined by the semantic metamodel. Users may not be limited to predefined cell types. They may create new logic cell types with their own processing logic. The program logic that can be created in this way is then distributed in the device network together with the theme definition and may be executed via an interpreter in the individual logic cells.

The logic cells may have a unique topic for which they are responsible, they may have an input channel to receive messages on this topic, they may process these messages, they may store messages, and they may forward messages to other logic cells. The messages may be expressed in a specific language and may be technically transmitted in a serialized RDF representation. During serialization, the method may comply with identifiers based on a lookup table that the system automatically generates from the theme definition and that may be available to all devices. The topic of a logic cell may consist of a multi-level designation: A general task to which the logic cells concerned may be assigned, a criterion /dimension based on which the logic cells may view data, and a designation of the dimension for which the logic cells may be responsible. In an example where a sensor for measuring the room temperature is provided, the task may be "measurements", the dimension for viewing could be "location", and the specific location managed by a logic cell may be called "room1". In this example, this results in the following topic for the logic cells: Measurement/Location/Room1. In addition to dimensions like "room1", nested dimensions may be supported. For example, if the sensor is located in a larger complex, the location could be extended to include the building and floor number, and the topic then reads as follows: Measurement/Location/Building1/Floor1/Room1.

The "communicatively connected" may refer to the state in which two or more logic cells or devices are linked in such a way that they can exchange information or data with each other. Being communicatively connected allows these entities to collaborate and coordinate their actions by sending and receiving messages or signals across a network.

The "resources" may refer to the computational, storage, and/or communication capabilities that a logic cell or device may provide. This may include processing power, memory, bandwidth, data, and/or any other assets that can be utilized to perform network tasks and/or support the operation of the network.

The "network task" may consider a specific operation and/or function that needs to be carried out within the device network. This may include data processing, communication routing, information retrieval, device management, and/or any other activity that the network is designed to perform. The network task may be assigned to the devices and/or logic cells within the network, which may collaborate to complete it. The creatable device network allows for an easy data retrieval. This may be achieved by the possibility of asking any logic cell of the network a specific question, and providing the requested information and/or knowledge via the collaborating device network, i.e. via other logic cells. This approach allows for efficient and flexible data retrieval, as users may access any requested information without requiring complex queries or searches.

The "theme definition" may refer to a structured description of the tasks and/or objectives that are to be accomplished by the device network. It may be based on a semantic metamodel, providing a high-level input that may guide how tasks are allocated and executed. The theme definition may serve as the blueprint for generating the execution plan that drives the network's operations. The theme definition may be ontology-based. The theme definition may outline network structure-forming mechanisms and/or the capabilities of the devices and/or logic cells involved. The theme definition may serve as a blueprint for the device network, defining (potential) data sources and sinks and/or an underlying processing logic.

When a theme definition is ontology-based, it means that the tasks and objectives within the device network are structured and defined using an ontology. An ontology in this context may be a formal representation of knowledge that describes the concepts, relationships, and rules within a specific domain. It may provide a shared vocabulary and framework that allows devices and logic cells to understand and process information consistently. In a self-organized, semantic-based device network, an ontology-based theme definition may ensure that all network components interpret tasks and data in the same way. For example, if the network is managing an industrial process, the ontology might define concepts like "machine," "sensor," "temperature," and their relationships (e.g., "sensors measure temperature"). By using this ontology, the theme definition may describe tasks such as "monitor temperature" or "adjust machine settings" in a way that is meaningful and understandable to all devices in the network. This approach enhances interoperability and automation, as the ontology provides a standardized way to define and communicate tasks across different devices and systems. It may also allow for more intelligent decision-making, as the logic cells can reason about the relationships and constraints defined in the ontology to optimize their actions.

The "execution plan" in a self-organized, semantic-based device network may be a guide that outlines how the network will accomplish the tasks specified in the theme definition. It may detail task allocation, ensuring that each logic cell or device within the network is assigned specific responsibilities to break down the overall task into manageable parts. The plan may also specify communication paths, defining how logic cells should exchange information, including data flow, communication protocols, and timing for message exchanges. This ensures efficient and effective communication throughout the network.

The "semantic metamodel" may consider a framework that defines the relationships, meanings, and/or structures of the data and tasks within the network. The semantic metamodel may provide a conceptual model that considers that all or at least a subset of components of the device network understand the tasks and data in a consistent and meaningful way. The semantic metamodel may help to create a shared understanding among the devices and/or logic cells, enabling more efficient and accurate collaboration.

The "execution plan" may identify relevant structure-forming mechanisms in the ontology and may retrieve a respective capability description of the devices and/or logic cells, which are or may be available in the (to be built) device network. Based on this information, the execution plan may be generated, which may then be distributed to the individual devices and/or logic cells. When a device accepts a to be processed task, i.e., based on an output of the network optimization model, for example to be addressed to the device via morphogenesis, it may become a network node or peer. The thereby provided network nodes/peers may interpret the execution plan and use self-organizing procedures to build a distributed processing logic that enables the peer-to-peer network to efficiently collect, store, process, and/or share information based on the ontology.

The "communication connection" may refer to specific pathways or links through which logic cells or devices exchange information. These connections may be physical (such as wired or wireless links) or logical (such as protocols or interfaces) and are defined in the execution plan to ensure proper data flow between the cells.

The "messages" may refer to units of information or data that are transmitted between logic cells or devices within the network. The messages may carry instructions, data, and/or status updates that may be suitable for coordinating tasks and operations within the device network. Messages enable the communication and collaboration necessary for the network to function effectively.

The "a network optimization model" may be a tool or algorithm used to simulate various configurations of the network to determine the most efficient and effective setup. The network optimization model may evaluate different placements of logic cells, communication paths, and/or resource allocations to optimize the network's performance. The network optimization model may help in building a self-organized network that maximizes efficiency, minimizes latency, and ensures optimal use of resources.

A user may group the devices to be brought into the device network into zones. The user may define what type of information may be allowed to leave that zone and what may be only processed in that zone. It may also be possible to create hierarchical zones.

The "connectivity type" may include unidirectional, bidirectional and/or multidirectional connectivity. The execution plan may be provided for resource allocation. The execution plan may provide instructions on how processing power, memory, bandwidth, and/or other resources may be distributed among the logic cells. This ensures that each logic cell has the necessary resources to perform its tasks without overwhelming the network. Coordination rules may be included in the execution plan to ensure that the actions of the logic cells are synchronized, avoiding conflicts or redundancies. Also, optimization strategies may be embedded in the execution plan to enhance the network's performance. This may involve dynamically adjusting task assignments, modifying communication paths, and/or reallocating resources based on real-time conditions and feedback from the network optimization model. The execution plan may also include mechanisms for error handling and/or recovery, ensuring that the device network may continue to operate smoothly even in the event of failures or unexpected issues. Additionally, the execution plan may incorporate feedback and adaptation mechanisms. These may allow the device network to monitor its performance and/or to make real-time adjustments to optimize operations continually.

The semantic metamodel may be designed to incorporate language elements that include standardized and/or adjustable vocabulary. This means that it may provide a set of predefined terms and concepts that may ensure consistency across the network. These standardized vocabulary elements allow for clear and unambiguous communication between devices and logic cells, as each element has a specific, universally recognized meaning within the network. The semantic metamodel may also support adjustable vocabulary, allowing for flexibility and customization. This may enable the device network to adapt to specific contexts and/or tasks by modifying and/or expanding the vocabulary to suit particular needs, ensuring that the system remains relevant and effective in various situations. Furthermore, the semantic metamodel may establish semantic connections between language elements. These connections may define relationships, dependencies, and/or hierarchies among the terms and concepts, allowing the network to understand not just individual elements but also how they interact and relate to one another.

In particular, real-time optimization and/or adaptive processing may thereby be enabled, while data storage is provided within the network. The data storage function may be provided without using any blockchain-related technology. The network optimization model may use real-time usage and/or utilization information to optimize and redistribute any given task allocation for optimizing the network utilization and/or throughput. This ensures that the device network is constantly adapting to changing conditions and/or requirements.

In a further aspect, the network optimization model comprises a morphogenetic model, the morphogenetic model comprises at least one of a Gierer-Meinhardt-based model, a Turing-based model, a Meinhardt-Klingler-based model and a French Flag-based model for morphogenetic simulation or any other suitable network optimization model for building and optimizing the self-organized, semantic-based device network.

One of the foundational models for morphogenetic simulation is the Gierer-Meinhardt-based model, a type of reaction-diffusion framework. This model describes the interaction between an activator, which promotes its own production and the production of an inhibitor, and the inhibitor, which diffuses more rapidly and suppresses the activator's production. This model is significant as it provides a mechanism for self-organization within the device network.

The Turing-based model is another reaction-diffusion model that explains spontaneous pattern formation. It also involves an activator and an inhibitor but emphasizes how small disturbances in a uniform distribution of these chemicals can grow over time into stable, periodic patterns. The critical factor here is the different diffusion rates of the substances, leading to a phenomenon known as diffusion-driven instability. This model offers a potential for complex organization of device network patterns, arising from simple initial conditions.

Building on these models, the Meinhardt-Klingler-based model extends the Gierer-Meinhardt framework by incorporating more complex interactions between multiple activators and inhibitors. This extension allows for the simulation of more intricate network patterns, such as the branching of networks or the segmentation among networks. The model provides a more detailed and nuanced understanding of how multiple factors can interact to produce sophisticated patterns during development of the device network(s).

The French Flag-based model focuses on how logic cells interpret positional information to differentiate into specific cell types. This model is based on the concept of morphogen gradients, where a signaling logic cell is distributed in varying concentrations across a field of logic cells. Depending on the concentration, logic cells may cross certain thresholds and differentiate into different cell types. This model offers a simple yet powerful explanation for how organized network structures develop from uniform beginnings by interpreting positional information on the devices and/or the logic cells.

In this aspect, utilization of morphogenetic principles may be used to guide formation and development of logic cell structures in a distributed network environment. This approach leverages the unique properties of morphogens and applies these biological principles to a computational framework. Morphogens preferably consider substances that dictate a pattern of tissue development in a process of morphogenesis. By simulating morphogenetic processes, it is possible to assign roles and create structures in distributed computer environments in a more efficient and secure manner. This may be achieved by connecting nodes / logic cells to a peer-to-peer network and assigning these logic cells / peers with roles using a morphogenetic-based or related process. By leveraging the principles of morphogenesis, it is possible to create structures in distributed systems / device networks that may be more resilient, adaptable and/or secure. This may lead to faster and/or more efficient data exchange and processing between logic cells, and thus, within the built network.

The aspect may also describe possible alternatives for providing a self-organized, semantic-based device network by use of a network optimization model. The aspect is not limited to the explicitly mentioned network optimization models, but may consider any suitable network optimization model for performing the building and optimization task. Thus, multiple further network optimization models may be implicitly included herein. Also, it is to be understood that the named network optimization models may be combined and/or simplified and/or adapted to specific network use cases.

In a further aspect, the placing comprises at least one of at least partly accepting the execution plan by at least one of the logic cells, interpreting at least one instruction comprised in the execution plan by at least one of the logic cells, and building a distributed processing logic among the at logic cells.

This aspect enables an efficient collection, storage, processing, and/or sharing of information among the at least two logic cells based on an ontology of the theme definition and/or the execution plan derived from the theme definition.

In a further aspect, the input description is provided as a text description based on language text elements. The language text elements may include natural language text elements.

The input description may be expressed in the form of text, meaning that it may use natural language and/or structured text elements to describe the tasks, goals, or parameters that the network needs to accomplish. This makes the input more intuitive and easier to understand for both human operators and systems that can interpret textual data. Additionally or alternatively, the input description may comprise numerical input. The description may be constructed using language text elements, which may be words, phrases, and/or sentences that follow a syntax and grammar of a natural or formal language. These elements may be designed to convey meaning clearly and concisely, ensuring that the instructions provided are easy to interpret and translate into actions within the network. Since the input may be provided in a text-based format, it may be human-readable. This allows operators or system designers to easily specify what the device network should do without needing to use complex coding or configuration tools. By using language text elements, the input description may leverage the richness of language to provide detailed and nuanced instructions. For example, it might describe not only what tasks need to be performed but also the conditions under which they should be executed, priorities, and other contextual information.

In a further aspect, the transmitting one or more messages comprises receiving and/or sending and/or storing information at least among the logic cells and/or among the at least two devices.

The feature "transmitting one or more messages" may involve a series of processes that include receiving, sending, and/or storing information within the device network. This transmission may occur both among the logic cells and between the devices. The process may begin with logic cells or devices receiving information, which may be data, instructions, and/or status updates. Following this, the information may be sent to other relevant logic cells or devices, enabling communication and coordination across the network. In addition to sending and receiving, the feature may also include the capability to store information. This means that data can be temporarily or permanently retained within a logic cell or device, allowing for future use or reference. This stored information may be critical for tasks that require memory of past states, ongoing processes, or historical data. This ensures that information flows efficiently throughout the network, enabling collaboration and execution of tasks among logic cells and devices.

In a further aspect, at least two of the logic cells are of a different cell type, the different cell types being configured to perform at least one subtask of the at least one network task.

The logic cells and/or the devices within the network may be used to store data and/or to provide information in a redundant manner without using any blockchain technology. This approach provides a more efficient and scalable solution than traditional distributed databases. In the device network, at least two of the logic cells are of different cell types, each designed to perform specific functions. These different cell types may be configured to handle distinct subtasks that contribute to the overall completion of a network task. By having diverse cell types, the network may assign specialized roles to each logic cell, ensuring that the subtasks are executed efficiently and effectively. For example, one type of logic cell may be optimized for data processing, while another logic cell is configured for communication and/or storage. Each cell type may provide its unique capabilities, allowing the device network to distribute subtasks according to the strengths of each cell type. This specialization enables the device network to tackle complex tasks in a more organized and efficient manner, with each logic cell focusing on the task it is best equipped to handle. This division of labor not only enhances performance of the device network but also provides flexibility and scalability within the device network, allowing it to adapt to varying demands and conditions.

In a further aspect, at least one of the logic cells comprises at least two partitions , being configured to process a subset of information included in the performed communication and/or to provide a sharding function and/or to provide a redundant storage.

At least one of the logic cells in the network may be designed with at least two partitions, preferably allowing it to handle multiple functions simultaneously. However, simultaneous handling of multiple functions may be possible without such partitioning. These partitions may be configured to process a specific subset of the information that may be exchanged during communication within the network. Each partition may operate independently, focusing on its designated portion of the information, which enables the logic cell to efficiently manage and process data in parallel. By dividing its resources across these partitions, the logic cell can handle complex tasks more effectively, as each partition is dedicated to processing a particular subset of information. This design enhances the cell's ability to process data quickly and accurately.

In a further aspect, the utilizing the morphogenetic model comprises producing and sending, by at least one of the at least two logic cells, an activator to at least one other one of the logic cells until the at least one other one of the logic cells fulfills a morphing condition, and on fulfilling the morphing condition, producing and sending, by the at least other one of the logic cells, an inhibitor to the at least one of the logic cells for deactivating the activator.

In a morphogenetic model, the process may begin with one or more logic cells producing and sending a signal as an activator to other logic cells. This activator influences the receiving logic cells, prompting them to respond in a specific manner. The receiving logic cells continue to interact with the activator until they reach a critical point / the morphing condition. This condition may trigger a transformation or change in the logic cells, such as altering their position in the network, their behavior and/or their function. Once the morphing condition is fulfilled, the transformed logic cells may produce and send out a different signal, i.e. an inhibitor. The inhibitor is then sent back to the original logic cells or those responsible for producing the activator. Its role is to deactivate the activator, effectively stopping further signaling and preventing unnecessary changes. This feedback mechanism may ensure that the morphogenetic process is tightly controlled, allowing logic cells to change only when necessary and halting the process once the desired transformation has been achieved.

In a further aspect, a computer program product is proposed comprising instructions which, when the program is executed by a computer, cause the computer to perform the steps of the present method in one aspect thereof.

The computer program product preferably comprises a collection of instructions written in one or more programming languages, preferably designed to perform the tasks and/or functions described in the method when executed by a computer. Preferably, the instructions in the program are designed to cause the computer to go through and perform the various steps and sequences of the method according to the disclosed aspects.

In a further aspect, a computer-readable data carrier is proposed on which such a computer program product is stored.

This computer-readable data carrier can comprise various physical media, such as CDs, DVDs, USB sticks, hard disks or semiconductor memories, for example SSDs, which can be read by computers or similar electronic devices. The computer program product stored on the medium preferably comprises a collection of instructions or code that can be executed by a computer to perform specific functions or tasks. The program may be written in different programming languages and may include different components such as executable files, libraries, configuration files and documentation. The data carrier preferably enables the computer to read and execute the program stored on it to implement the intended functions.

All aspects and embodiments as described above may be combined as deemed fit by the skilled person.

In a further aspect, a method for utilizing a self-organized, semantic-based device network for performing at least one network task is provided, wherein the self-organized, semantic-based device network is built according to the disclosed method in anyone of its aspects, wherein each one of the at least two logic cells is configured for responding to a network request related to the at least one network task.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

Further possible implementations of the invention also comprise not explicitly mentioned combinations of any features or embodiments that are described above or below regarding the exemplary embodiments. In this case, a person skilled in the art will also add individual aspects as improvements or supplementation to the respective basic form of the invention.

### DESCRIPTION OF THE FIGURES

Fig. 1 shows a schematic flow chart of a herein presented aspect of the method.
Fig. 2 shows a schematic flow chart of a herein presented aspect of the method.
Fig. 3 shows a schematic block diagram of a device network having at least one device with two logic cells according to a herein presented aspect.
Fig. 4 shows a schematic device network having at least two devices, each with at least one logic cell according to a herein presented aspect.
Fig. 5 shows an example of an execution plan.
Fig. 6 shows a schematic block diagram of a device network having at least one device with two logic cells according to a herein presented aspect.

### DETAILED DESCRIPTION OF THE INVENTION

Unless indicated to the contrary, elements that are the same or functionally the same have been given the same reference signs in the figures. It should also be noted that the illustrations in the figures are not necessarily true to scale.

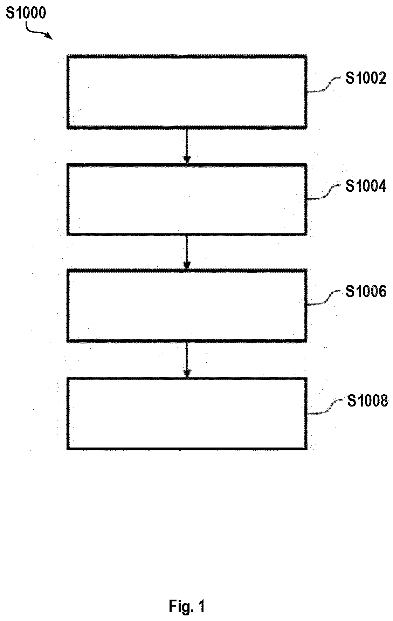

Fig. 1 shows a schematic flow chart of a herein presented aspect of the method S1000.

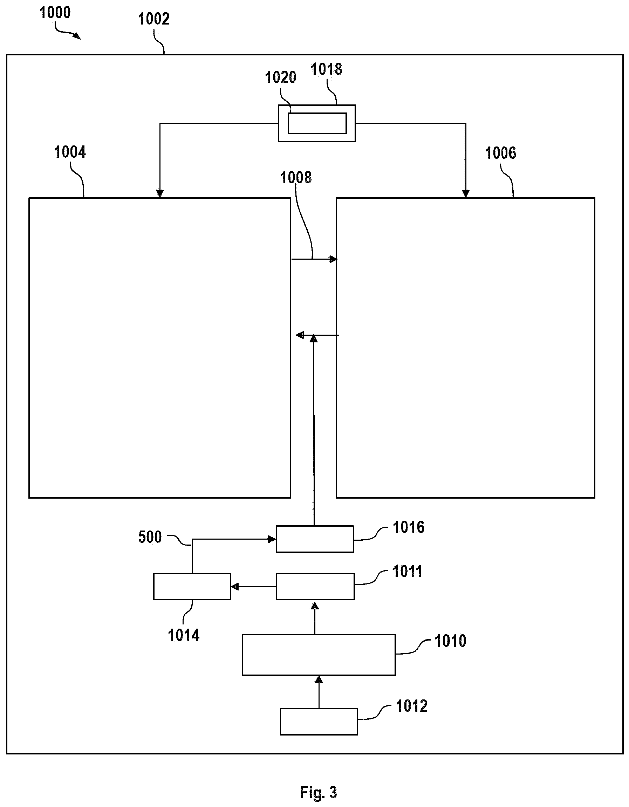

The method S 1000 is used for building a self-organized, semantic-based device network 1000 (see for example in Fig. 3) with at least one device 1002 for performing at least one network task, the at least one device 1002 comprising at least two logic cells 1004, 1006 communicatively connected to one another and configured for collaborating in and providing resources for the at least one network task.

The method S1000 comprises the following steps:
In step S1002, the method S1000 comprises providing a theme definition based on a semantic metamodel, the theme definition comprising an input description of at least one task to be assigned to the device network 1000.

In step S1004, the method S1000 comprises generating an execution plan 500 (see Fig. 3) based on the theme definition, the execution plan 500 comprising information about the communication connection of the at least two logic cells 1004, 1006.

In step S1006, the method S1000 comprises transmitting one or more messages 1008 between the at least two logic cells 1004, 1006 based on the execution plan 500.

In step S1008, the method S1000 comprises, during the communication, utilizing a network optimization model for placing at least one of the at least two cells 1004, 1006 in the network to build the self-organized, semantic-based device network 1000 for collaboratively performing the at least one network task among the at least two cells 1004, 1006.

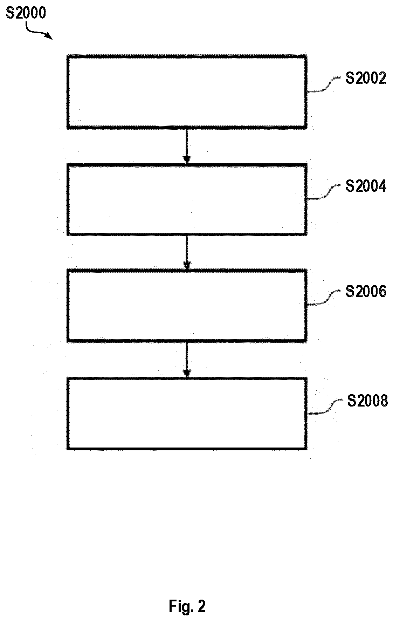

Fig. 2 shows a schematic flow chart of a herein presented aspect of the method S2000.

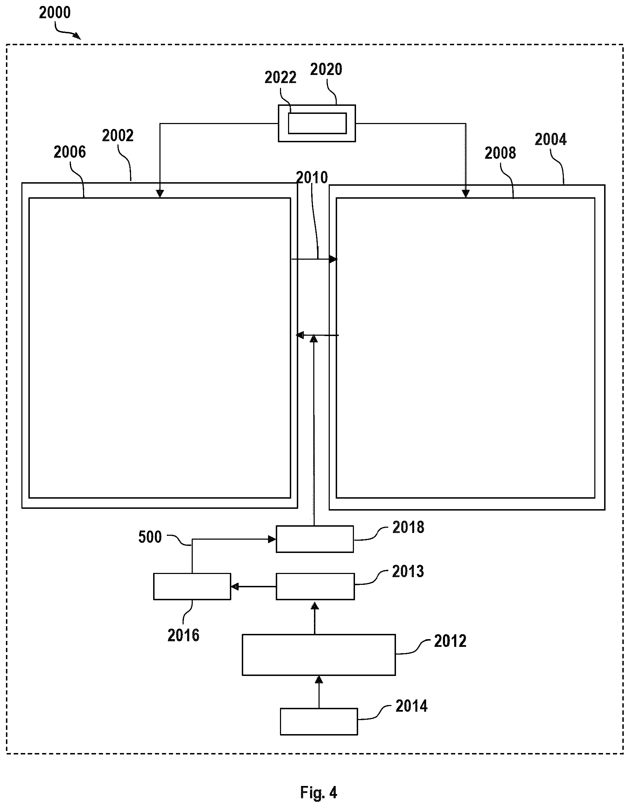

The method S2000 is used for building a self-organized, semantic-based device network 2000 (see Fig. 4) with at least two devices 2002, 2004 for performing at least one network task, the at least two devices 2002, 2004 each comprising at least one logic cell 2006, 2008 communicatively connected to at least one other logic cell 2006, 2008 and configured for collaborating in and providing resources for the at least one network task.

The method S2000 comprises the following steps:
In step S2002, the method S2000 comprises providing a theme definition based on semantic metamodel, the theme definition comprising an input description of at least one task to be assigned to the device network 2000.

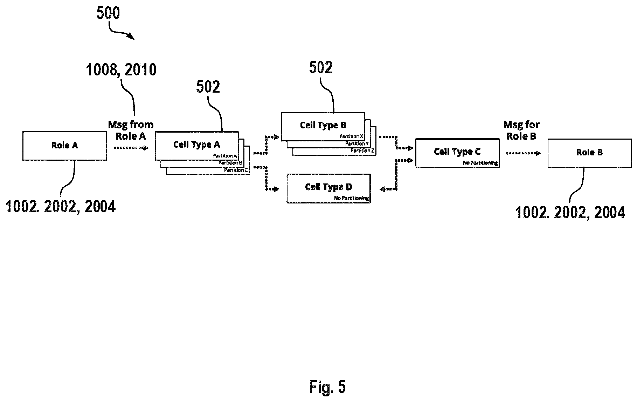

In step S2004, the method S2000 comprises generating an execution plan 500 (see Fig. 5) based on the theme definition, the execution plan 500 comprising information about the communication connection of the at least one logic cell 2006, 2008 of the at least two devices 2004, 2006.

In step S2006, the method S2000 comprises transmitting one or more messages 2010 between the at least one logic cell 2006, 2008 of the at least two devices 2002, 2004 based on the execution plan 500.

In step S2008, the method S2000 comprises, during the communication, utilizing a network optimization model for placing at least one of the at least one cell 2006, 2008 in the network to build the self-organized, semantic-based device network 2000 for collaboratively performing the at least one network task among the at least two devices 2002, 2004.

Fig. 3 shows the self-organized, semantic-based device network 1000 with the at least one device 1002, the at least one device 1002 comprising at least two logic cells 1004, 1006 communicatively connected to one another, in more detail. The network 1000 comprises a theme definition module 1010 configured for providing a theme definition 1011 based on semantic metamodel 1012, the theme definition 1011 comprising an input description of at least one task to be assigned to the device network 1000. The network 1000 also comprises an execution plan module 1014 configured for generating the execution plan 500 based on the theme definition 1011, the execution plan 500 comprising information about the communication connection of the at least two logic cells 1004, 1006. The network 1000 also comprises a transmission module 1016 configured for transmitting the one or more messages 1008 between the at least two logic cells 1004, 1006 based on the execution plan 500. Also, the network 1000 has a network optimization module 1018 configured for utilizing a network optimization model 1020 for placing at least one of the at least two cells 1004, 1006 in the network to build the self-organized, semantic-based device network 1000.

Fig. 4 shows the self-organized, semantic-based device network 2000 with the at least two devices 2002, 2004, the at least two devices 2002, 2004 comprising at least one logic cell 2006, 2008 communicatively connected to one another, in more detail. The network 2000 comprises a theme definition module 2012 configured for providing a theme definition 2013 based on a semantic metamodel 2014, the theme definition 2013 comprising an input description of at least one task to be assigned to the device network 2000. The network 2000 also comprises an execution plan module 2016 configured for generating the execution plan 500 based on the theme definition 2013, the execution plan 500 comprising information about the communication connection of the at least two logic cells 2006, 2008. The network 2000 also comprises a transmission module 2018 configured for transmitting the one or more messages 2010 between the at least two logic cells 2006, 2008 based on the execution plan 500. Also, the network 2000 has a network optimization module 2020 configured for utilizing a network optimization model 2022 for placing at least one of the at least two cells 2006, 2008 in the network to build the self-organized, semantic-based device network 2000.

The semantic metamodel 1012, 2014 may comprise language elements, such as standardized and/or adjustable vocabulary, and/or semantic connections between language elements.

Fig. 5 shows an example of an execution plan 500. The general task of this execution plan 500 is to process a message 1008, 2010 from a device 1002, 2002, 2004 with Role A and to send the result to a device 1002, 2002, 2004 with role B. It shows various aspects that are relevant for an execution plan 500. One of these aspects is the fact, that the message flow can be split. Cell type A may pass messages not only to cell type B but also to cell type D. The messages that cell type A passes to cell type B and to cell type D can be different. For example, it is possible that cell type A forwards aggregated information to cell type B and index information to cell type D, which the network 1000, 2000 uses to perform efficient information lookup. Another aspect is the handling of partition schemas. The partitioning 502 schemes of the different cell types can be different, as is the case with cell type A and cell type B in the example. This is preferably because the partitioning 502 is based on the semantic structures of the network 1000, 2000, and different aspects of the model may rely on different segmentations. Also, there is the possibility of decoupling over time. This may be possible by first placing messages 1008, 2010 in a watch list. When further messages 1008, 2010 arrive, the network 1000, 2000 checks whether there is a request in the watch list to trigger a follow-up message. Finally, there are cells 1004, 1006, 2006, 2008 that contain a timer and become active periodically, e.g., to periodically average values to provide interested parties with regular information.

For the following explanations, Fig. 5 is still considered, but the partitioning 502 shown therein is ignored. In this example, role A requires cell type A and role B requires cell type D for information processing. To identify suitable devices 1002, 2002, 2004 to provide these cell types, the present method and network may rely on the concepts of growth of biological systems and on morphogenic gradient models such as the Gierer-Meinhardt model. It is based on the idea that a logic cell signals a need by releasing a certain substance, also known as an activator. It continuously produces more activators. These are gradually released into the environment (to the other cells) and the concentration of the activator continuously increases. The activator represents the desire for the environment (the neighboring cells) to respond, i.e., by expressing a certain cell type. The devices 1002, 2002, 2004 may test their ability to express a particular cell type. The more suitable they are, the lower the activation level required to express a corresponding cell. When a device 1002, 2002, 2004 expresses a matching cell, it produces a counter substance called an inhibitor. This substance reacts with the activator and breaks it down, resulting in a decrease in the concentration of the activator and a corresponding decrease in growth. This is the basic mechanism of cell growth.

Similar mechanisms are used for the development of the inner plan cell types, in the presented example, cell types B and C. Once cells A and D are expressed, they send out more substances to express cells of types B and C. These are expressed in places where both the activators of cell type A and cell type D are present. This causes them to be expressed in the middle of the cells rather than somewhere off to the side. Since the morphogens mentioned are produced not only during the initial formation of the structures but continuously, they also provide a mechanism to adapt the structure of the device network 1000, 2000 to changing loads. Furthermore, the concentration of activators provides information about the state of health. If it increases excessively at certain points, it indicates that the resources of the device network 1000, 2000 are no longer sufficient to ensure the required functionality and that the users need additional resources.

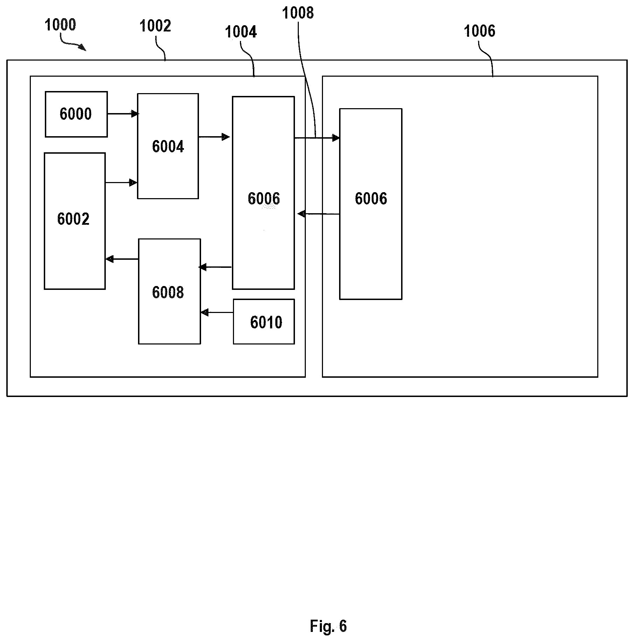

Fig. 6 shows another example of a network 1000 having one device 1002 with two logic cells 1004, 1006. The network 1000 may comprise an order placement module 6000. The order placement module 6000 may provide information on whether and, if so, which orders a logic cell 1004, 1006 may fulfill to make an externally specified contribution to the overall network 1000. The network may comprise a role management module 6002. The role management module 6002 may manage roles that a logic cell 1004, 1006 assumes to make its own contribution to the functioning of the overall network 1000. The network 1000 may comprise a needs determination module 6004. The needs determination module 6004 may evaluate the orders of the order determination module 6000 and the current roles according to the role management module 6002 and uses them to determine the needs a logic cell 1004, 1006 may have for its environment (i.e., a surrounding logic cell and/or device having a logic cell). The network 1000 may also have a morphogenic module 6006. The morphogenic module 6006 may evaluate the needs determined by the needs determination module and may emerge morphogens to the logic cells 1004, 1006 in its environment based on this. In addition, it may take the morphogens from the logic cells 1004, 1006 in the environment and may use them to determine the environment's need to take on specific roles.

Capability management provides information about which capabilities a node can contribute to the fulfillment of tasks of the overall system. The network 1000 may also have a role takeover module 6008. The role takeover module 6008 may determine the need to take over specific roles via the morphogenic module 6006, may compare these with its own capabilities via a capability management module 6010 and may decide whether the logic cell 1004, 1006 may take over further roles. If this is the case, it may register these new roles in the role management module 6002. Thereby, a method and network for self-organized distributed computer systems is provided that leverage the, for example, principles of morphogenesis to assign roles and create structures in logic cells of the network 1000.

It is to be understood that Fig. 6 may also apply, mutatis mutandis, for the network 2000. Thus, the Fig. 6 is not limited to the network of 1000.

### LIST OF REFERENCE SIGNS

- 500: execution plan
- 502: partition

- 1000: device network
- 1002: device
- 1004: logic cell
- 1006: logic cell
- 1008: message
- 1010: theme definition module
- 1011: theme definition
- 1012: semantic metamodel
- 1014: execution plan module
- 1016: transmission module
- 1018: network optimization module
- 1020: network optimization model

- 2000: device network
- 2002: device
- 2004: device
- 2006: logic cell
- 2008: logic cell
- 2010: message
- 2012: theme definition module
- 2013: theme definition
- 2014: semantic metamodel
- 2016: execution plan module
- 2018: transmission module
- 2020: network optimization module
- 2022: network optimization model
- 6000: order placement module
- 6002: role management module
- 6004: needs determination module
- 6006: morphogenic module
- 6008: role takeover module
- 6010: capability management module

- S1000: method
- S1002: method step "providing"
- S1004: method step "generating"
- S1006: method step "transmitting"
- S1008: method step "utilizing"

- S2000: method
- S2002: method step "providing"
- S2004: method step "generating"
- S2006: method step "transmitting"
- S2008: method step "utilizing"

## Claims

1. A method (S1000) for building a self-organized, semantic-based device network (1000) with at least one device (1002) for performing at least one network task, the at least one device (1002) comprising at least two logic cells (1004, 1006) communicatively connected to one another and configured for collaborating in and providing resources for the at least one network task; the method (S1000) comprising:
providing (S1002) a theme definition (1011) based on a semantic metamodel (1012), the semantic metamodel (1012) comprising language elements including standardized and/or adjustable vocabulary and/or semantic connections between language elements, the theme definition (1011) being ontology-based and comprising an input description of at least one task to be assigned to the device network (1000);
generating (S1004) an execution plan (500) based on the theme definition (1011), the execution plan (500) specifying at least communication connections, a connectivity type between the logic cells (1004, 1006) and/or a capability description about an availability of the respective device and/or the respective logic cell to perform at least a part of the at least one network task, and comprising information about the communication connection of the at least two logic cells (1004, 1006);
transmitting (S1006) one or more messages (1008) between the at least two logic cells (1004, 1006) based on the execution plan (500); and
during communication of the at least two logic cells, utilizing (S1008) a network optimization model (1020) configured to determine a placement of at least one of the at least two cells (1004, 1006) in the network to build the self-organized, semantic-based device network (1000) for collaboratively performing the at least one network task among the at least two cells (1004, 1006), wherein the utilizing is performed continuously or at predefined time intervals.

2. The method according to claim 1, wherein the network optimization model (1020) comprises a morphogenetic model, the morphogenetic model comprises at least one of a Gierer-Meinhardt-based model, a Turing-based model, a Meinhardt-Klingler-based model and a French Flag-based model for morphogenetic simulation.

3. The method according to any one of the preceding claims, wherein the placing comprises at least one of at least partly accepting the execution plan (500) by at least one of the logic cells (1004, 1006), interpreting at least one instruction comprised in the execution plan (500) by at least one of the logic cells (1004, 1006), and building a distributed processing logic among the at logic cells (1004, 1006).

4. The method according to any one of the preceding claims, wherein the input description is provided as a text description based on language text elements.

5. The method according to any one of the preceding claims, wherein the transmitting one or more messages (1008) comprises receiving and/or sending and/or storing information at least among the logic cells (1004, 1006).

6. The method according to any one of the preceding claims, wherein at least two of the logic cells (1004, 1006) are of a different cell type, the different cell types being configured to perform at least one subtask of the at least one network task.

7. The method according to any one of the preceding claims, wherein at least one of the logic cells (1004, 1006) comprises at least two partitions (502) being configured to process a subset of information included in the performed communication and/or to provide a sharding function and/or to provide a redundant storage.

8. The method according to claim 2, wherein the utilizing the morphogenetic model comprises producing and sending, by at least one of the at least two logic cells (1004, 1006), an activator to at least one other one of the logic cells (1004, 1006) until the at least one other one of the logic cells (1004, 1006) fulfills a morphing condition, and on fulfilling the morphing condition, producing and sending, by the at least other one of the logic cells (1004, 1006), an inhibitor to the at least one of the logic cells (1004, 1006) for deactivating the activator.

9. A self-organized, semantic-based device network (1000) with at least one device (1002), the at least one device (1002) comprising at least two logic cells (1004, 1006) communicatively connected to one another; the network (1000) comprising:
a theme definition module (1010) configured for providing a theme definition (1011) based on a semantic metamodel (1012), the semantic metamodel (1012) comprising language elements including standardized and/or adjustable vocabulary and/or semantic connections between language elements, the theme definition (1011) being ontology-based and comprising an input description of at least one task to be assigned to the device network (1000);
execution plan module (1014) configured for generating an execution plan (500) based on the theme definition (1011), the execution plan (500) specifying at least communication connections, a connectivity type between the logic cells (1004, 1006) and/or a capability description about an availability of the respective device and/or the respective logic cell to perform at least a part of the at least one network task, and comprising information about the communication connection of the at least two logic cells (1004, 1006);
a transmission module (1016) configured for transmitting one or more messages between the at least two logic cells (1004, 1006) based on the execution plan (500); and
a network optimization module (1018) configured for utilizing a network optimization model (1020) configured to determine placement of at least one of the at least two cells (1004, 1006) in the network to build the self-organized, semantic-based device network (1000) for collaboratively performing the at least one network task among the at least two cells (1004, 1006) during communication of the at least two logic cells, wherein the utilizing is performed continuously or at predefined time intervals.

10. The method according to any one of claims 1-8, wherein the build self-organized, semantic-based device network (1000) is adapted to perform at least one network task, and wherein each one of the logic cells (1004, 1006) is configured for responding to a network request related to the at least one network task.

## Patentansprüche

1. Verfahren (S1000) zum Aufbauen eines selbstorganisierten, semantisch basierten Vorrichtungsnetzwerks (1000) mit mindestens einer Vorrichtung (1002) zum Durchführen mindestens einer Netzwerkaufgabe, die mindestens eine Vorrichtung (1002) umfassend mindestens zwei kommunikativ miteinander verbundene Logikzellen (1004, 1006), die dazu eingerichtet sind, bei der mindestens einen Netzwerkaufgabe zusammenzuwirken und Ressourcen für die mindestens eine Netzwerkaufgabe bereitzustellen; das Verfahren (S1000) umfassend:
Bereitstellen (S1002) einer Themendefinition (1011) basierend auf einem semantischen Metamodell (1012), das semantische Metamodell (1012) umfassend Sprachelemente, die standardisierte und/oder anpassbare Vokabular- und/oder semantische Verbindungen zwischen Sprachelementen beinhalten, wobei die Themendefinition (1011) ontologiebasiert ist und eine Eingabebeschreibung mindestens einer Aufgabe umfasst, die dem Vorrichtungsnetzwerk (1000) zugewiesen werden soll;
Erzeugen (S1004) eines Ausführungsplans (500) basierend auf der Themendefinition (1011), der Ausführungsplan (500) spezifizierend mindestens Kommunikationsverbindungen, einen Konnektivitätstyp zwischen den Logikzellen (1004, 1006) und/oder eine Fähigkeitsbeschreibung über eine Verfügbarkeit der jeweiligen Vorrichtung und/oder der jeweiligen Logikzelle zum Durchführen mindestens eines Teils der mindestens einen Netzwerkaufgabe und umfassend Informationen über die Kommunikationsverbindung der mindestens zwei Logikzellen (1004, 1006);
Übertragen (S1006) einer oder mehrerer Nachrichten (1008) zwischen den mindestens zwei Logikzellen (1004, 1006) basierend auf dem Ausführungsplan (500); und
während der Kommunikation der mindestens zwei Logikzellen, Verwenden (S1008) eines Netzwerkoptimierungsmodells (1020), eingerichtet, um eine Platzierung mindestens einer der mindestens zwei Zellen (1004, 1006) in dem Netzwerk zu bestimmen, um das selbstorganisierte, semantisch basierte Vorrichtungsnetzwerk (1000) zum kollaborativen Durchführen der mindestens einen Netzwerkaufgabe unter den mindestens zwei Zellen (1004, 1006) aufzubauen, wobei das Verwenden kontinuierlich oder in vordefinierten Zeitintervallen durchgeführt wird.

2. Verfahren nach Anspruch 1, das Netzwerkoptimierungsmodell (1020) umfassend ein morphogenetisches Modell, das morphogenetische Modell umfassend mindestens eines von einem Gierer-Meinhardt-basierten Modell, einem Turing-basierten Modell, einem Meinhardt-Klingler-basierten Modell und einem French-Flag-basierten Modell zur morphogenetischen Simulation.

3. Verfahren nach einem der vorhergehenden Ansprüche, das Platzieren umfassend mindestens eines von mindestens teilweisem Akzeptieren des Ausführungsplans (500) durch mindestens eine der Logikzellen (1004, 1006), Interpretieren mindestens einer in dem Ausführungsplan (500) enthalten Anweisung, durch mindestens eine der Logikzellen (1004, 1006) und Aufbauen einer verteilten Verarbeitungslogik unter den mindestens Logikzellen (1004, 1006).

4. Verfahren nach einem der vorhergehenden Ansprüche, wobei die Eingabebeschreibung als eine Textbeschreibung basierend auf Sprachtextelementen bereitgestellt wird.

5. Verfahren nach einem der vorhergehenden Ansprüche, das Übertragen einer oder mehrerer Nachrichten (1008) umfassend das Empfangen und/oder Senden und/oder Speichern von Informationen mindestens unter den Logikzellen (1004, 1006).

6. Verfahren nach einem der vorhergehenden Ansprüche, wobei mindestens zwei der Logikzellen (1004, 1006) von einem unterschiedlichen Zellentyp sind, wobei die unterschiedlichen Zellentypen eingerichtet sind, um mindestens eine Teilaufgabe der mindestens einen Netzwerkaufgabe durchzuführen.

7. Verfahren nach einem der vorhergehenden Ansprüche, mindestens eine der Logikzellen (1004, 1006) umfassend mindestens zwei Partitionen (502), die eingerichtet sind, um eine Teilmenge von Informationen zu verarbeiten, die in der durchgeführten Kommunikation enthalten sind, und/oder um eine Sharding-Funktion bereitzustellen und/oder um einen redundanten Speicher bereitzustellen.

8. Verfahren nach Anspruch 2, das Verwenden des morphogenetischen Modells umfassend das Erzeugen und Senden, durch mindestens eine der mindestens zwei Logikzellen (1004, 1006), eines Aktivators an mindestens eine andere der Logikzellen (1004, 1006), bis die mindestens eine andere der Logikzellen (1004, 1006) eine Morphing-Bedingung erfüllt, und beim Erfüllen der Morphing-Bedingung, Erzeugen und Senden, durch die mindestens eine andere der Logikzellen (1004, 1006), eines Inhibitors an die mindestens eine der Logikzellen (1004, 1006) zum Deaktivieren des Aktivators.

9. Selbstorganisiertes, semantisch basiertes Vorrichtungsnetzwerk (1000) mit mindestens einer Vorrichtung (1002), die mindestens eine Vorrichtung (1002) umfassend mindestens zwei kommunikativ miteinander verbundene Logikzellen (1004, 1006); das Netzwerk (1000) umfassend:
ein Themendefinitionsmodul (1010), eingerichtet zum Bereitstellen einer Themendefinition (1011) basierend auf einem semantischen Metamodell (1012), das semantische Metamodell (1012) umfassend Sprachelemente, die standardisierte und/oder anpassbare Vokabular- und/oder semantische Verbindungen zwischen Sprachelementen beinhalten, wobei die Themendefinition (1011) ontologiebasiert ist und eine Eingabebeschreibung mindestens einer Aufgabe umfasst, die dem Vorrichtungsnetzwerk (1000) zugewiesen werden soll;
ein Ausführungsplanmodul (1014), das zum Erzeugen eines Ausführungsplans (500) basierend auf der Themendefinition (1011) eingerichtet ist, der Ausführungsplan (500) umfassend mindestens Kommunikationsverbindungen, einen Konnektivitätstyp zwischen den Logikzellen (1004, 1006) und/oder eine Fähigkeitsbeschreibung über eine Verfügbarkeit der jeweiligen Vorrichtung und/oder der jeweiligen Logikzelle zum Durchführen mindestens eines Teils der mindestens einen Netzwerkaufgabe spezifiziert und Informationen über die Kommunikationsverbindung der mindestens zwei Logikzellen (1004, 1006);
ein Übertragungsmodul (1016), das zum Übertragen einer oder mehrerer Nachrichten zwischen den mindestens zwei Logikzellen (1004, 1006) basierend auf dem Ausführungsplan (500) eingerichtet ist; und
ein Netzwerkoptimierungsmodul (1018), eingerichtet zum Verwenden eines Netzwerkoptimierungsmodells (1020), das eingerichtet ist, um eine Platzierung mindestens einer der mindestens zwei Zellen (1004, 1006) in dem Netzwerk zu bestimmen, um das selbstorganisierte, semantisch basierte Vorrichtungsnetzwerk (1000) zum kollaborativen Durchführen der mindestens einen Netzwerkaufgabe unter den mindestens zwei Zellen (1004, 1006) während der Kommunikation der mindestens zwei Logikzellen aufzubauen, wobei das Verwenden kontinuierlich oder in vordefinierten Zeitintervallen durchgeführt wird.

10. Verfahren nach einem der Ansprüche 1-8, wobei das aufgebaute selbstorganisierte, semantisch basierte Vorrichtungsnetzwerk (1000) angepasst ist, um mindestens eine Netzwerkaufgabe durchzuführen, und wobei jede der Logikzellen (1004, 1006) zum Antworten auf eine Netzwerkanforderung in Bezug auf die mindestens eine Netzwerkaufgabe eingerichtet ist.

## Revendications

1. Procédé (S1000) pour construire un réseau de dispositif sémantique auto-organisé (1000) avec au moins un dispositif (1002) pour effectuer au moins une tâche de réseau, l'au moins un dispositif (1002) comprenant au moins deux cellules logiques (1004, 1006) connectées en communication l'une à l'autre et configurées pour collaborer dans et fournir des ressources pour l'au moins une tâche de réseau ; le procédé (S1000) comprenant :
fournir (S1002) une définition de thème (1011) basée sur un métamodèle sémantique (1012), le métamodèle sémantique (1012) comprenant des éléments de langage comprenant un vocabulaire normalisé et/ou ajustable et/ou des connexions sémantiques entre des éléments de langage, la définition de thème (1011) étant basée sur l'ontologie et comprenant une description d'entrée d'au moins une tâche à attribuer au réseau de dispositif (1000) ;
générer (S1004) un plan d'exécution (500) basé sur la définition de thème (1011), le plan d'exécution (500) spécifiant au moins des connexions de communication, un type de connectivité entre les cellules logiques (1004, 1006) et/ou une description de capacité concernant une disponibilité du dispositif respectif et/ou de la cellule logique respective pour effectuer au moins une partie de l'au moins une tâche de réseau, et comprenant des informations concernant la connexion de communication des au moins deux cellules logiques (1004, 1006) ;
transmettre (S1006) un ou plusieurs messages (1008) entre les au moins deux cellules logiques (1004, 1006) sur la base du plan d'exécution (500) ; et
pendant la communication entre les au moins deux cellules logiques, utiliser (S1008) un modèle d'optimisation de réseau (1020) configuré pour déterminer un placement d'au moins l'une des au moins deux cellules (1004, 1006) dans le réseau pour construire le réseau de dispositif sémantique auto-organisé (1000) pour effectuer en collaboration l'au moins une tâche de réseau parmi les au moins deux cellules (1004, 1006), dans lequel l'utilisation est effectuée en continu ou à des intervalles de temps prédéfinis.

2. Procédé selon la revendication 1, dans lequel le modèle d'optimisation de réseau (1020) comprend un modèle morphogénétique, le modèle morphogénétique comprend au moins l'un d'un modèle basé sur Gierer-Meinhardt, d'un modèle basé sur Turing, d'un modèle basé sur Meinhardt-Klingler et d'un modèle basé sur French Flag pour une simulation morphogénétique.

3. Procédé selon l'une quelconque des revendications précédentes, dans lequel le placement comprend au moins l'une d'une acceptation au moins partielle du plan d'exécution (500) par au moins l'une des cellules logiques (1004, 1006), d'une interprétation d'au moins une instruction comprise dans le plan d'exécution (500) par au moins l'une des cellules logiques (1004, 1006), et d'une construction d'une logique de traitement distribuée parmi les au moins cellules logiques (1004, 1006).

4. Procédé selon l'une quelconque des revendications précédentes, dans lequel la description d'entrée est fournie en tant que description de texte basée sur des éléments de texte de langage.

5. Procédé selon l'une quelconque des revendications précédentes, dans lequel la transmission d'un ou plusieurs messages (1008) comprend une réception et/ou un envoi et/ou un stockage d'informations au moins parmi les cellules logiques (1004, 1006).

6. Procédé selon l'une quelconque des revendications précédentes, dans lequel au moins deux des cellules logiques (1004, 1006) sont d'un type de cellule différent, les différents types de cellule étant configurés pour effectuer au moins une sous-tâche de l'au moins une tâche de réseau.

7. Procédé selon l'une quelconque des revendications précédentes, dans lequel au moins l'une des cellules logiques (1004, 1006) comprend au moins deux partitions (502) étant configurées pour traiter un sous-ensemble d'informations incluses dans la communication effectuée et/ou pour fournir une fonction de fragmentation et/ou pour fournir un stockage redondant.

8. Procédé selon la revendication 2, dans lequel l'utilisation du modèle morphogénétique comprend une production et un envoi, par au moins l'une des au moins deux cellules logiques (1004, 1006), d'un activateur à au moins une autre des cellules logiques (1004, 1006) jusqu'à ce que l'au moins une autre des cellules logiques (1004, 1006) remplisse une condition de morphage, et lors du remplissage de la condition de morphage, une production et un envoi, par l'au moins une autre des cellules logiques (1004, 1006), d'un inhibiteur à l'au moins une des cellules logiques (1004, 1006) pour désactiver l'activateur.

9. Réseau de dispositif sémantique auto-organisé (1000) avec au moins un dispositif (1002), l'au moins un dispositif (1002) comprenant au moins deux cellules logiques (1004, 1006) connectées en communication l'une à l'autre ; le réseau (1000) comprenant :
un module de définition de thème (1010) configuré pour fournir une définition de thème (1011) basée sur un métamodèle sémantique (1012), le métamodèle sémantique (1012) comprenant des éléments de langage comprenant un vocabulaire normalisé et/ou ajustable et/ou des connexions sémantiques entre des éléments de langage, la définition de thème (1011) étant basée sur l'ontologie et comprenant une description d'entrée d'au moins une tâche à attribuer au réseau de dispositif (1000) ;
un module de plan d'exécution (1014) configuré pour générer un plan d'exécution (500) basé sur la définition de thème (1011), le plan d'exécution (500) spécifiant au moins des connexions de communication, un type de connectivité entre les cellules logiques (1004, 1006) et/ou une description de capacité concernant une disponibilité du dispositif respectif et/ou de la cellule logique respective pour effectuer au moins une partie de l'au moins une tâche de réseau, et comprenant des informations concernant la connexion de communication des au moins deux cellules logiques (1004, 1006) ;
un module de transmission (1016) configuré pour transmettre un ou plusieurs messages entre les au moins deux cellules logiques (1004, 1006) sur la base du plan d'exécution (500) ; et
un module d'optimisation de réseau (1018) configuré pour utiliser un modèle d'optimisation de réseau (1020) configuré pour déterminer un placement d'au moins l'une des au moins deux cellules (1004, 1006) dans le réseau pour construire le réseau de dispositif sémantique auto-organisé (1000) pour effectuer en collaboration l'au moins une tâche de réseau parmi les au moins deux cellules (1004, 1006) pendant la communication entre les au moins deux cellules logiques, dans lequel l'utilisation est effectuée en continu ou à des intervalles de temps prédéfinis.

10. Procédé selon l'une quelconque des revendications 1 à 8, dans lequel le réseau de dispositif sémantique auto-organisé (1000) est adapté pour effectuer au moins une tâche de réseau, et dans lequel chacune des cellules logiques (1004, 1006) est configurée pour répondre à une demande de réseau liée à l'au moins une tâche de réseau.
